# EUROPÄISCHE PATENTSCHRIFT

(11) **EP 0 565 973 B1**
(45) Veröffentlichungstag und Bekanntmachung des Hinweises auf die Patenterteilung: **27.12.1995**
(21) Anmeldenummer: 93105542.0
(22) Anmeldetag: 03.04.1993
(51) Int. Cl.: B64D 9/00, B64D 11/06

(54) **Vorrichtung zur Verriegelung**
Anchor means
Dispositif d'ancrage

(30) Priorität: 16.04.1992 DE 4212694
(43) Veröffentlichungstag der Anmeldung: 20.10.1993
(73) Patentinhaber: Daimler-Benz Aerospace Airbus Gesellschaft mit beschränkter Haftung, 21129 Hamburg (DE)
(72) Erfinder: Vogg, Günter, W-2800 Bremen (DE); Wieck, Jürgen, W-2800 Bremen (DE)
(74) Vertreter: Hansmann, Dierk, Dipl.-Ing.

(56) Entgegenhaltungen:
- US-A- 3 212 457
- US-A- 3 241 501
- US-A- 3 306 234
- US-A- 4 230 432
- US-A- 4 449 875

## Beschreibung

Die Erfindung betrifft eine Vorrichtung zur Verriegelung von Komponenten für Innenräume für Flugzeugen, die die Komponenten in Sitzschienen fixiert, die im Bereich eines Flugzeugbodens angeordnet sind und die mindestens ein Verriegelungselement aufweist, das drehbeweglich in einem Träger geführt ist und mindestens einen Vorsprung aufweist, der in einer verriegelten Positionierung einen oberen Begrenzungssteg der Sitzschiene hintergreift und bei der das Verriegelungselement als ein Bolzen ausgebildet ist, der im Bereich seines dem Träger abgewandten Endes mit einer Traverse verbunden ist, die den Bolzen zur Ausbildung von zwei Vorsprüngen seitlich überkragt, wobei der Bolzen ein Außengewinde zur Arretierung relativ zum Träger aufweist und daß mindestens ein Bolzen zwischen zwei Positionierelementen angeordnet ist, die sich im wesentlichen parallel zum Bolzen erstrecken und in Aufnahmeerweiterungen der Sitzschiene einführbar sind

Derartige Vorrichtungen werden beispielsweise verwendet, um Sitze und andere Einrichtungsgegenstände im Bereich von Passagierflugzeugen, bzw. Bodenverkleidungselemente oder Frachtraumunterteilungen im Bereich von Frachtflugzeugen mit dem Flugzeugboden zu verbinden. Die bekannten Vorrichtungen sind jedoch nicht in ausreichender Weise in der Lage, eine einfache Handhabung, eine raumsparende Dimensionierung sowie eine zuverlässige Fixierung der Komponenten in Richtung aller xyz-Koordinaten zu gewährleisten.

Aus der US-A-3 241 501 ist bereits eine Vorrichtung gemäß dem Oberbegriff des Anspruchs 1 zur Verriegelung von Komponenten für Innenräume von Flugzeugen bekannt. Mit Hilfe der Vorrichtung werden die Komponenten im Bereich von Sitzschienen fixiert, die im Bereich eines Flugzeugbodens angeordnet sind. Die Vorrichtung weist mindestens ein Verriegelungselement auf, das drehbeweglich in einem Träger geführt ist. Das Verriegelungselement ist als ein Bolzen ausgebildet, der im Bereich seines dem Träger abgewandten Endes mit einer Traverse verbunden ist, die den Bolzen zur Ausbildung von zwei Vorsprüngen seitlich überkragt. Insbesondere ist daran gedacht, zwei mit Vorsprüngen versehene Bolzen in Richtung des Verlaufes der Sitzschienen hintereinander anzuordnen.

Aus der US-A-4 449 875 ist eine weitere Vorrichtung zur Fixierung von Komponenten im Bereich von Sitzschienen von Flugzeugen bekannt. In einem Träger sind wiederum zwei mit Vorsprüngen versehene Bolzen hintereinander angeordnet. Die Bolzen sind mit den Vorsprüngen in Ausnehmungen der Sitzschiene einführbar und werden gemeinsam mit dem Träger in einer Längsrichtung der Sitzschiene verschoben. Nach dem Verschieben sind die Vorsprünge unterhalb eines verengten Schlitzes der Sitzschiene angeordnet und können relativ zur Sitzschiene verspannt werden, um den Träger zu fixieren.

Aufgabe der vorliegenden Erfindung ist es, eine Vorrichtung der einleitend genannten Art derart zu konstruieren, daß eine universelle Verwendbarkeit bei einer geringen Dimensionierung sowie einer ausreichenden Funktionalität gewährleistet ist.

Diese Aufgabe wird erfindungsgemäß dadurch gelöst, daß die Positionierelemente mit der Traverse zugewandt angeordneten Seitenaussparungen versehen sind, die die Vorsprünge in einer entriegelten Positionierung aufnehmen.

Durch die Kombination des Bolzens und der Traverse ist es in einfacher Weise möglich, durch eine Drehbewegung eine Verriegelung im Bereich beider Begrenzungsstege der Sitzschiene vorzunehmen. Hierdurch wird eine verkippungssichere Fixierung erreicht. Mit Hilfe des Gewindes ist es möglich, nach einer Verdrehung des Verriegelungselementes eine Verspannung vorzunehmen, die ein unbeabsichtigtes Zurückdrehen in die Ausgangsposition verhindert. Durch die Positionierelemente wird bereits vor der Durchführung der Verriegelung eine Fixierung in x- und y-Richtung des Flugzeuges vorgenommen. Die Aufnahmeerweiterungen sind in einem vorgegebenen Rasterabstand, beispielsweise in einem Zollraster, im Bereich der Sitzschiene vorgesehen. Mit Hilfe des Verriegelungselementes erfolgt nach der Verdrehung eine Fixierung in z-Richtung des Flugzeuges.

Zur Ermöglichung einer kompakten Anordnung der Positionierelemente und der Verriegelungselemente ist vorgesehen, daß die Positionierelemente mit der Traverse zugewandt angeordneten Seitenaussparungen versehen sind, die die Vorsprünge in einer entriegelten Positionierung aufnehmen.

Eine definierte Entriegelungspositionierung wird dadurch bereitgestellt, daß im Bereich der Seitenaussparung eine Anschlagfläche zur Begrenzung der Verschwenkbewegung der Traverse angeordnet ist.

Zur Ermöglichung eines Aufsetzens der aus den Verriegelungselementen und den Positionierelementen gebildeten Einheit in lotrechter Richtung von oben in die Sitzschiene hinein wird vorgeschlagen, daß die Traverse eine Breite aufweist, die etwas geringer als eine Ausdehnung von einer die Aufnahmeerweiterungen ineinander überleitenden Verbindungsnut quer zu einer Längsrichtung der Sitzschiene ist.

Zur Verhinderung eines Verdrehens der aus den Positionierelementen und den Verriegelungselementen ausgebildeten Baugruppe relativ zur Komponente bei einer kurzen Ausführungsform wird vorgeschlagen, daß Arretierstifte zur Fixierung der Positionierelemente relativ zur Komponente vorgesehen sind, die sich im wesentlichen parallel zum Bolzen erstrecken.

Eine kompakte und dennoch einfach zu handhabende Ausführungsform läßt sich dadurch konstruieren, daß drei Positionierelemente und zwei Verriegelungselemente in Richtung einer Längserstreckung der Sitzschiene jeweils abwechselnd hintereinander angeordnet sind.

Zur Ermöglichung einer Gewichtseinsparung wird vorgeschlagen, daß der Träger als ein Bodenelement der Komponente ausgebildet ist.

Eine durch einen kompakten Aufbau einfach zu handhabende Gesamtvorrichtung kann aber auch dadurch bereitgestellt werden, daß der Träger als eine Basisplatte ausgebildet ist, die sich im wesentlichen parallel zu einer unteren Begrenzung der Komponente erstreckt. Zur Verbindung dieser kompakten Vorrichtung mit der Komponente brauchen im Bodenbereich der Komponente lediglich Bohrungen zur Durchführung der Bolzen und ggf. Zusatzbohrungen zur Einführung der Arretierstifte vorgesehen werden. Die Vorrichtung kann somit entweder bereits vor einer Montage mit der Komponente verbunden werden und gemeinsam mit der Komponente in die Sitzschiene eingesetzt werden, oder zunächst separat in die Sitzschiene eingeführt und verriegelt werden und nachträglich mit der Komponente verbunden werden. Bei der letztgenannten Arbeitsweise brauchen lediglich noch die Muttern festgespannt werden.

Zur Ermöglichung einer einfachen Verdrehung der Verriegelungselemente sowie einer Verhinderung der Verdrehung bei der Verspannung relativ zur Komponente wird vorgeschlagen, daß der Bolzen im Bereich seiner der Traverse abgewandten Ausdehnung mit einer Kerbe zur Einleitung von Rotationsbewegungen bzw. zur Verhinderung von Rotationsbewegungen versehen ist.

Die Verspannung relativ zur Komponente kann in besonders einfacher Weise dadurch erfolgen, daß auf dem Außengewinde eine Mutter zur Verspannung des Bolzens geführt ist.

In den Zeichnungen sind Ausführungsbeispiele der Erfindung schematisch dargestellt. Es zeigen:
- Fig. 1: einen Längsschnitt durch eine Vorrichtung mit zwei hintereinander angeordneten Verriegelungselementen,
- Fig. 2: eine Draufsicht auf die Vorrichtung gemäß Fig. 1,
- Fig. 3: einen Querschnitt gemäß Schnittlinie III-III in Fig. 3,
- Fig. 4: eine Ansicht der Vorrichtung von unten in einem verriegelten Zustand,
- Fig. 5: eine Ansicht der Vorrichtung von unten in einem entriegelten Zustand,
- Fig. 6: einen Längsschnitt durch eine Vorrichtung mit einem Verriegelungselement,
- Fig. 7: eine Draufsicht auf die Vorrichtung gemäß Fig. 6,
- Fig. 8: einen Querschnitt gemäß Schnittlinie VIII-VIII in Fig. 7,
- Fig. 9: eine Ansicht der Vorrichtung gemäß Fig. 6 von unten in einem verriegelten Zustand **und**
- Fig. 10: eine Ansicht von unten in einem entriegelten Zustand.

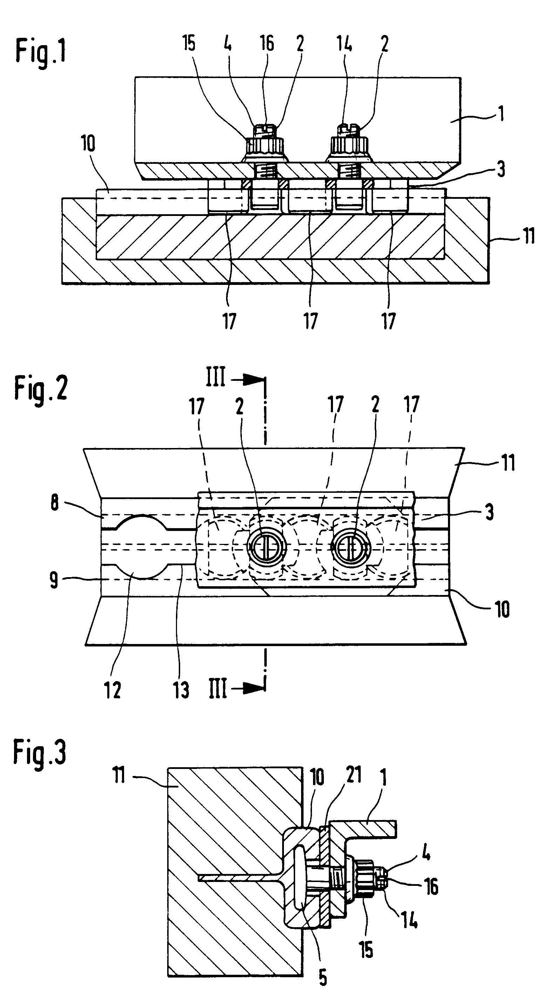

Die Vorrichtung zur Verrieglung von Komponenten (1) besteht entsprechend der Ausführungsform in Fig. 1 aus zwei Verriegelungselementen (2), die im Bereich eines Trägers (3) drehbeweglich geführt sind. Bei dieser Ausführungsform ist der Träger (3) als ein Winkelprofil ausgebildet. Es ist aber auch möglich, als Träger (3) ein Bodenelement der Komponente (1) zu verwenden, oder eine separate Basisplatte (21) vorzusehen. Das Verriegelungselement (2) besteht im wesentlichen aus einem Bolzen (4), der im Bereich seines der Komponente (1) abgewandten Endes mit einer Traverse (5) verbunden ist, die den Bolzen (4) im Bereich ihrer Enden mit Vorsprüngen (6,7) überkragt. Die Vorsprünge (6,7) hintergreifen obere Begrenzungsstege (8,9) von Sitzschienen (10), die im Bereich eines Flugzeugbodens (11) angeordnet sind. Im Bereich einer von den Begrenzungsstegen (8,9) aufgespannten Ebene sind die Sitzschienen (10) mit Aufnahmeerweiterungen (12) sowie Verbindungsnuten (13) versehen, die die Aufnahmeerweiterungen (12) ineinander überleiten. Quer zu einer Längsrichtung der Sitzschiene (10) weisen die im wesentlichen kreisförmig konturierten Aufnahmeerweiterungen (11) einen größeren Durchmesser als die Verbindungsnuten (13) auf.

Zur Ermöglichung einer Arretierung der Verriegelungselemente (2) ist der Bolzen (4) mit einem Außengewinde (14) versehen, in das eine Mutter (15) eingreift, die den Bolzen (4) nach einem Anziehen relativ zum Träger (3) verspannt. Zur Verhinderung eines Verdrehens des Bolzens (4) bei einem Anziehen der Mutter (15) ist im Bereich einer Oberseite des Bolzens (4) eine Kerbe (16) vorgesehen, in die ein Schraubendreher eingreifen kann.

Zur Ermöglichung einer Fixierung der Komponenten (1) in Längsrichtung der Sitzschienen (10) sowie quer zur Längsrichtung der Sitz schienen (10) (x-y-Koordinaten) sind Positionierelemente (17) vorgesehen, die sich im wesentlichen parallel zum Bolzen (4) erstrecken. Die Positionierelemente (17) weisen einen Abstand zueinander auf, der dem Abstand der Aufnahmeerweiterungen (12) entspricht. Zur Ermöglichung einer kompakten Anordnung der Positionierelemente (17) sowie der Verriegelungselemente (2) sind die Positionierelemente (17) mit Seitenaussparungen (18) versehen, in die die Verriegelungselemente (2) mit den Vorsprüngen (6,7) in einem entriegelten Zustand eingreifen. Zur definierten Positionierung der Verriegelungselemente (2) in einem entriegelten Zustand weisen die Seitenaussparungen (18) Anschlagflächen (19) auf.

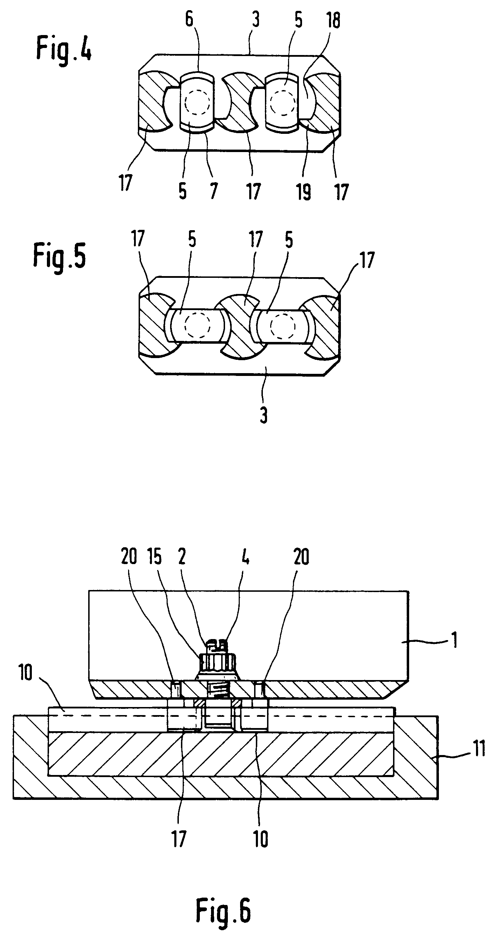

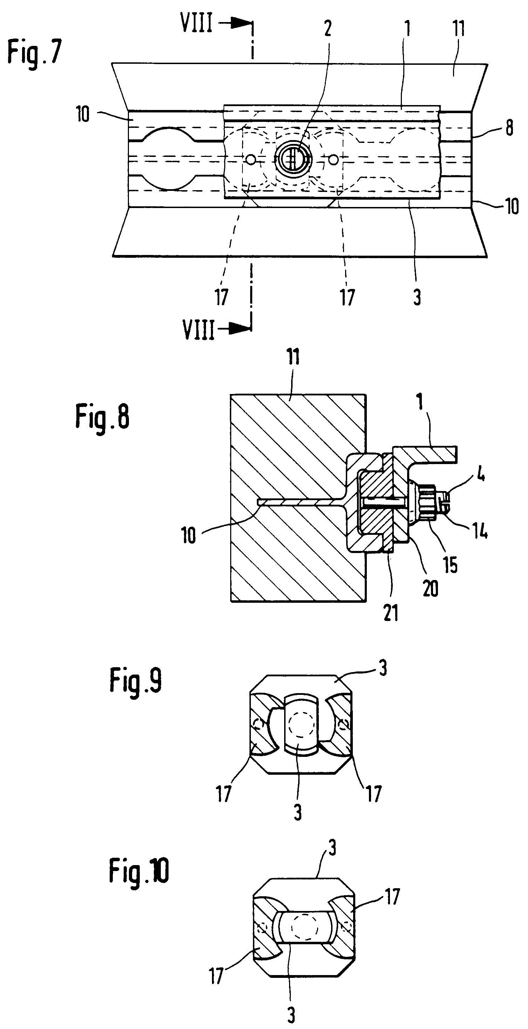

Bei der Ausführungsform gemäß den Fig. 6 bis 10 ist lediglich ein Verriegelungselement (2) vorgesehen, das zwischen zwei Positionierelementen (17) angeordnet ist. Zur Verhinderung einer Verdrehung der aus den Positionierelementen (17) ausgebildeten Baugruppe relativ zum Träger (3) sind Arretierstifte (20) vorgesehen, die den Träger (3) durchdringen. Zur Verringerung des Baugewichtes ist es möglich, die Positionierelemente (17) mit einer Querschnittfläche zu versehen, die nicht die vollständige Aufnahmeerweiterung (12) ausfüllt, sondern sich lediglich über etwas mehr als die Hälfte der Querschnittfläche der Aufnahmeerweiterung (12) erstreckt. Auch bei einer derartigen Dimensionierung der Positionierelemente (17) ist eine zuverlässige Fixierung innerhalb der Aufnahmeerweiterung (12) gewährleistet.

Zur Durchführung einer Montage der Komponenten (1) im Bereich der Sitzschiene (10) werden die Verriegelungselemente (2) in ihre Entriegelungspositionierung verdreht und mit den als x-y-Stops ausgebildeten Positionierelementen (17) in die beispielsweise im Zollraster angeordneten Aufnahmeerweiterungen (12) eingeführt. Anschließend erfolgt eine Verdrehung der Verriegelungselemente (2) derart, daß die Vorsprünge (6,7) die Begrenzungsstege (8,9) untergreifen. Hierdurch ist auch eine Verriegelung in z-Richtung durchgeführt. Nach einem Einsetzen der Positionierelemente (17) in die Aufnahmeerweiterungen (12) erfolgt somit kein Verschieben mehr, sondern lediglich eine Arretierung der Verriegelungselemente (2).

## Patentansprüche

1. Vorrichtung zur Verriegelung von Komponenten (1) für Innenräume von Flugzeugen, die die Komponenten (1) in Sitzschienen (10) fixiert, die im Bereich eines Flugzeugbodens (11) angeordnet sind und die mindestens ein Verriegelungselement (2) aufweist, das drehbeweglich in einem Träger (3) geführt ist und mindestens einen Vorsprung (6,7) aufweist, der in einer verriegelten Positionierung einen oberen Begrenzungssteg (8,9) der Sitzschiene (10) hintergreift und bei der das Verriegelungselement (2) als ein Bolzen (4) ausgebildet ist, der im Bereich seines dem Träger (3) abgewandten Endes mit einer Traverse (5) verbunden ist, die den Bolzen (4) zur Ausbildung von zwei Vorsprüngen (6,7) seitlich überkragt, wobei der Bolzen (4) ein Außengewinde (14) zur Arretierung relativ zum Träger (3) aufweist und bei der mindestens ein Bolzen (4) zwischen zwei Positionierelementen (17) angeordnet ist, die sich im wesentlichen parallel zum Bolzen (4) erstrecken und in Aufnahmeerweiterungen (12) der Sitzschiene (10) einführbar sind, dadurch gekennzeichnet, daß die Positionierelemente (17) mit der Traverse (5) zugewandt angeordneten Seitenaussparungen (18) versehen sind, die die Vorsprünge (6,7) in einer entriegelten Positionierung aufnehmen.

2. Vorrichtung nach Anspruch 1, dadurch gekennzeichnet, daß im Bereich der Seitenaussparung (18) eine Anschlagfläche (19) zur Begrenzung der Verschwenkbewegung der Traverse (5) angeordnet ist.

3. Vorrichtung nach Anspruch 1 oder 2, dadurch gekennzeichnet, daß die Traverse (5) eine Breite aufweist, die etwas geringer als eine Ausdehnung von einer die Aufnahmeerweiterung (12) ineinander überleitenden Verbindungsnut (13) quer zu einer Längsrichtung der Sitzschiene (10) ist.

4. Vorrichtung nach einem der Ansprüche 1 bis 3, dadurch gekennzeichnet, daß Arretierstifte (20) zur Fixierung der Positionierelemente (17) relativ zur Komponente (1) vorgesehen sind, die sich im wesentlichen parallel zum Bolzen (4) erstrecken.

5. Vorrichtung nach einem der Ansprüche 1 bis 4, dadurch gekennzeichnet, daß drei Positionierelemente (17) und zwei Verriegelungselemente (2) in Richtung einer Längserstreckung der Sitzschiene (10) jeweils abwechselnd hintereinander angeordnet sind.

6. Vorrichtung nach einem der Ansprüche 1 bis 5, dadurch gekennzeichnet, daß der Träger (3) als ein Bodenelement der Komponente (1) ausgebildet ist.

7. Vorrichtung nach einem der Ansprüche 1 bis 5, dadurch gekennzeichnet, daß der Träger (3) als eine Basisplatte (21) ausgebildet ist, die sich im wesentlichen parallel zu einer unteren Begrenzung der Komponente (1) erstreckt.

8. Vorrichtung nach einem der Ansprüche 1 bis 7, dadurch gekennzeichnet, daß der Bolzen (4) im Bereich seiner der Traverse (5) abgewandten Ausdehnung mit einer Kerbe (16) zur Einleitung von Rotationsbewegungen bzw. zur Verhinderung von Rotationsbewegungen versehen ist.

9. Vorrichtung nach einem der Ansprüche 1 bis 8, dadurch gekennzeichnet, daß auf dem Außengewinde (14) eine Mutter (15) zur Verspannung des Bolzens (4) geführt ist.

## Claims

1. Device for anchoring components (1) for inner compartments of aircraft, whereby said device secures the components (1) in mounting rails (10) arranged in the region of an aircraft floor (11) and comprises at least one anchoring element (2) rotatably guided within a carrier (3) and comprises at least one projection (6, 7) engaging in a locked position an upper limiting web (8, 9) of the mounting rail (10) from the rear and in which the anchoring element (2) is designed as a bolt (4) which in the region of its end facing away from the carrier (3) is connected to a crossbar (5) projecting beyond the sides of the bolt (4) so as to form two projections (6, 7), said bolt (4) having an outer thread (14) for locking with respect to the carrier (3), and in which at least one bolt (4) is arranged between two locating elements (17) extending substantially parallel to the bolt (4) and capable of being introduced into expanded receiving pockets (12) of the mounting rail (10), characterised in that the locating elements (17) are provided with lateral recesses (18) so arranged as to face the crossbar (5), said lateral recesses accommodating the projections (6, 7) in an unlocked position.

2. Device according to Claim 1, characterised in that an abutment face (19) is arranged in the region of the lateral recess(18) with a view to limiting the swivelling motion of the crossbar (5).

3. Device according to Claim 1 or 2, characterised in that the crossbar (5) has a width slightly smaller than one extent of a connecting groove (13) linking the expanded receiving pockets (12) with one another at right angles to a longitudinal direction of the mounting rail (10).

4. Device according to one of Claims 1 to 3, characterised in that locking pins (20) are provided for securing the locating element (17) with respect to the component (1), said locking pins extending in a direction substantially parallel to the bolt (4).

5. Device according to one of Claims 1 to 4, characterised in that in the direction of a longitudinal extent of the mounting rail (10) three locating elements (17) and two anchoring elements (2) are arranged in alternating manner one behind the other.

6. Device according to one of Claims 1 to 5, characterised in that the carrier (3) is designed as a base element of the component (1).

7. Device according to one of Claims 1 to 5, characterised in that the carrier (3) is designed as a base plate (21) substantially parallel to a lower boundary of the component (1).

8. Device according to one of Claims 1 to 7 characterised in that, in the region of its extent facing away from the crossbar (5), the bolt (4) is provided with a notch (16) for initiating rotary movements or, respectively, for preventing rotary movements.

9. Device according to one of Claims 1 to 8 characterised in that a nut (15) for clamping the bolt (4) is guided on the outer thread (14).

## Revendications

1. Dispositif destiné au verrouillage de pièces pour l'intérieur des avions, ledit dispositif fixant les pièces (1) dans des rails de fixation (10) montés dans le sol de l'avion (11) et présentant au moins un élément de verrouillage (2) introduit dans un support (3) de manière à pouvoir pivoter et pourvu d'au moins une saillie (6, 7), laquelle, en position verrouillée, s'engrène à l'arrière d'une arête supérieure de délimitation (8, 9) du rail de fixation (10), l'élément de verrouillage (2) étant conçu comme un boulon (4) relié au niveau de l'extrémité opposée à son support (3) avec une traverse (5) dépassant latéralement le boulon (4) afin de former deux saillies (6, 7), le boulon (4) présentant un filet extérieur (14) assurant son blocage par rapport au support (3), dispositif dans le cas duquel au moins un boulon (4) est disposé entre les deux éléments de positionnement (17) s'étendant principalement parallèlement au boulon (4) et pouvant être introduits dans des logements de réception (12) du rail de fixation (10), **caractérisé en ce que** les éléments de positionnement (17) sont pourvus d'évidements latéraux (18) tournés vers la traverse (5) et recevant les saillies (6, 7) dans une position déverrouillée.

2. Dispositif selon la revendication 1, caractérisé en ce que au niveau de l'évidement latéral (18) est prévue une surface d'arrêt (19) destinée à limiter le mouvement de pivotement de la traverse (5).

3. Dispositif selon l'une ou l'autre des revendications 1 et 2, caractérisé en ce que la traverse (5) présente transversalement à une direction longitudinale du rail de fixation (10) une largeur légèrement inférieure à la dimension d'une rainure de liaison (13) assurant la transition entre les extensions de réception (12).

4. Dispositif selon l'une ou l'autre des revendications 1 à 3, caractérisé en ce que les chevilles d'arrêt (20) sont prévues pour la fixation des éléments de positionnement (17) par rapport aux pièces (1) s'étendant principalement parallèlement au boulon (4).

5. Dispositif selon l'une ou l'autre des revendications 1 à 4, caractérisé en ce que trois éléments de verrouillage (2) sont disposés alternativement les uns derrière les autres dans la direction d'une extension longitudinale du rail de fixation (10).

6. Dispositif selon l'une ou l'autre des revendications 1 à 5, caractérisé en ce que le support (3) est conçu comme un élément de soutien au sol de la pièce (1).

7. Dispositif selon l'une ou l'autre des revendications 1 à 5, caractérisé en ce que le support (3) est conçu comme une plaque de base (21) s'étendant principalement parallèlement à une limitation inférieure de la pièce (1).

8. Dispositif selon l'une ou l'autre des revendications 1 à 7, caractérisé en ce que le bouton (4) est pourvu au niveau de son extension opposée à la traverse (5) d'une entaille (16) destinée au déclenchement de mouvements de rotation respectivement à l'empêchement de mouvements de rotation.

9. Dispositif selon l'une ou l'autre des revendications 1 à 8, caractérisé en ce que sur le filet extérieur (14) est monté un écrou (15) destiné à bloquer le boulon.
